# EUROPEAN PATENT SPECIFICATION

(11) **EP 2 644 297 B1**
(45) Date of publication and mention of the grant of the patent: **09.05.2018**
(21) Application number: 13160487.8
(22) Date of filing: 21.03.2013
(51) Int. Cl.: B21H 1/06, B21H 1/12

(54) **EQUIPMENT FOR MANUFACTURING BY ROLLING A COMPLEX SHAPE ANNULAR ELEMENT, IN PARTICULAR A STEEL INSERT FOR AN OUTER RING OF A ROLLING BEARING**
AUSRÜSTUNG ZUR HERSTELLUNG DURCH WALZEN EINES RINGFÖRMIGEN ELEMENTS MIT KOMPLEXER FORM, INSBESONDERE EINES STAHLEINSATZES FÜR EINEN AUSSENRING EINES WÄLZLAGERS
ÉQUIPEMENT POUR FABRIQUER PAR LAMINAGE UN ÉLÉMENT ANNULAIRE DE FORME COMPLEXE, EN PARTICULIER UN INSERT D'ACIER POUR BAGUE EXTERNE D'UN PALIER À ROULEMENT

(30) Priority: 26.03.2012 IT TO20120267
(43) Date of publication of application: 02.10.2013
(73) Proprietor: Aktiebolaget SKF, 415 50 Göteborg (SE)
(72) Inventor: Galfre', Stefano, I-10063 Perosa Argentina (TO) (IT); Rostagno, Fabio, I-10069 Villar Perosa (TO) (IT)
(74) Representative: Tedeschini, Luca

(56) References cited:
- JP-A- 6 285 581
- JP-A- 9 176 740
- JP-A- 10 118 737

## Description

### BACKGROUND OF THE INVENTION

The present invention relates to an equipment for manufacturing by rolling a steel insert for an outer ring of a rolling bearing. In particular, the present invention may be advantageously applied to manufacturing steel inserts for a wheel hub unit, wherein the outer ring consists of an annular steel insert provided with two rolling races for the rolling bodies and adapted to withstand Hertzian type stresses and of an outer body, possibly provided with a flange, and adapted to withstand static and dynamic type stresses transmitted from the ground to the vehicle, and vice versa. More in general, the equipment according to the invention may be used to manufacture annular elements of any complex shape in reliable, easy manner.

In the most modern wheel hub types, e.g. according to WO2012003848, an outer ring of the aforesaid type is obtained in two steps, using two different materials: firstly, a steel annular insert, which carries the rolling races on an inner radial surface thereof, is made; then, a flanged element, made of aluminum or light alloy, is co-molded onto the insert. In this manner, a reduction of the total weight of the outer ring, and thus of the wheel hub unit as a whole, is obtained.

The only solution known at this time is to manufacture the insert by chip-forming a forged blank, while it would be simpler and faster to be able to manufacture at least some of the profiles required on the insert by plastic deformation.

However, it is worth noting that manufacturing complex axial-symmetrically shaped profiles, e.g. by rolling, on annular elements is not currently possible, except for some limited cases.

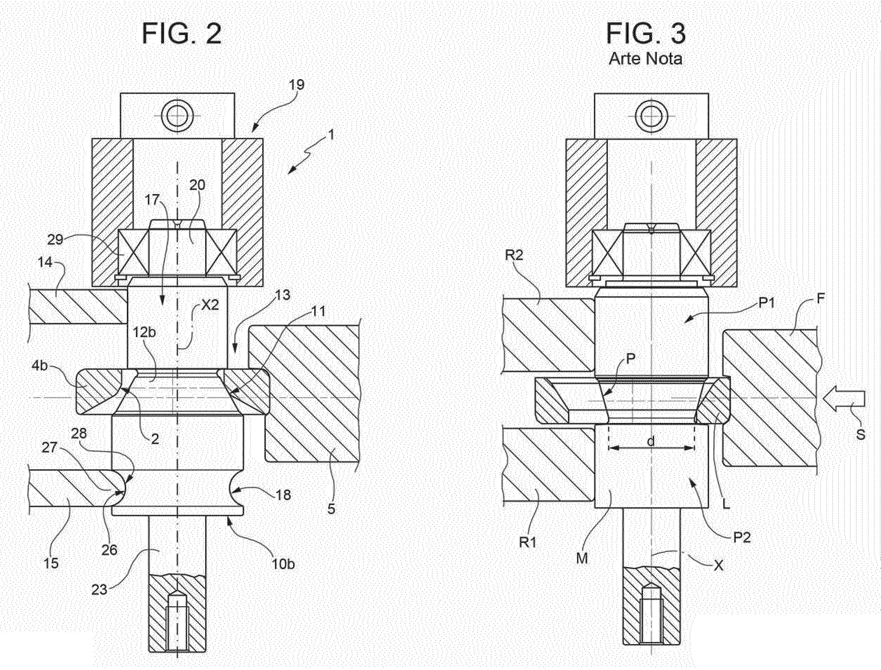

As shown in figure 3, the manufacturing of a required profile, e.g. on a radial inner surface of an annular element L by rolling, implies sandwiching the element L between a revolving forming tool F and a mandrel M, left free to rotate about an axis X; the tool F, by revolving, pushes against the mandrel M according to an arrow S, and therefore the mandrel M must be supported laterally, on the side opposite to the tool F, by a pair of receiving rolls R1 and R2, which rotate in idling manner and cooperate with cylindrical shoulder surfaces P1 and P2 of the mandrel M having the same diameter, so as to avoid creating in use, as a consequence of the thrust S, axial thrusts, which cannot be supported by the mandrel M. The radial surface of the mandrel M has a longitudinal profile on a radial plane between the shoulders P1 and P2, which negatively reproduces the required profile on the inner radial surface of the element L.

As a consequence, the diameter of the shoulders P1 ad P2 must be smaller than the minimum inner diameter of the element L being processed, otherwise the mandrel M cannot be inserted in the working position passing through element L, as shown in figure 3. In presence of profiles P with considerable diameter variations along axis X, the profile P of the mandrel M will have a minimum diameter "d", which determines the creation in the mandrel M of a localized narrowing of the crosswise section of the mandrel M, and therefore the mandrel M may fail to withstand the thrust S without the risk of breakage. Documents JP9176740 and JP6285581 do not overcome such drawbacks.

### SUMMARY OF THE INVENTION

It is an object of the present invention to provide an equipment adapted to manufacture by rolling a predetermined axial-symmetric longitudinal profile at least on an inner radial wall of an annular element which is free from the drawbacks described above and which, more in general, allows to manufacture complex shape annular elements on the radial walls, also in presence of major differences of diameter along the inner radial wall of the annular element.
According to the invention, an equipment for manufacturing by rolling predetermined axial-symmetric longitudinal profiles on radial surfaces of an annular element is provided as disclosed in claim 1.

### BRIEF DESCRIPTION OF THE DRAWINGS

Features and advantages of the present invention will be apparent in the description of the following non-limitative example of an embodiment thereof, with reference to the accompanying drawings, in which
- figure 1 diagrammatically shows the equipment according to the invention while processing an annular blank with different diameters at its opposite ends;
- figure 2 shows in simplified manner the equipment of the invention applied to the manufacturing of an annular element on which a conical surface must be formed;
- figure 3 shows the prior art of rolling operations of annular elements; and
- figures 4a and 4b show a first and a second embodiment of the mandrel belonging to the equipment of the invention, respectively.

### DETAILED DESCRIPTION OF PREFERRED EMBODIMENTS

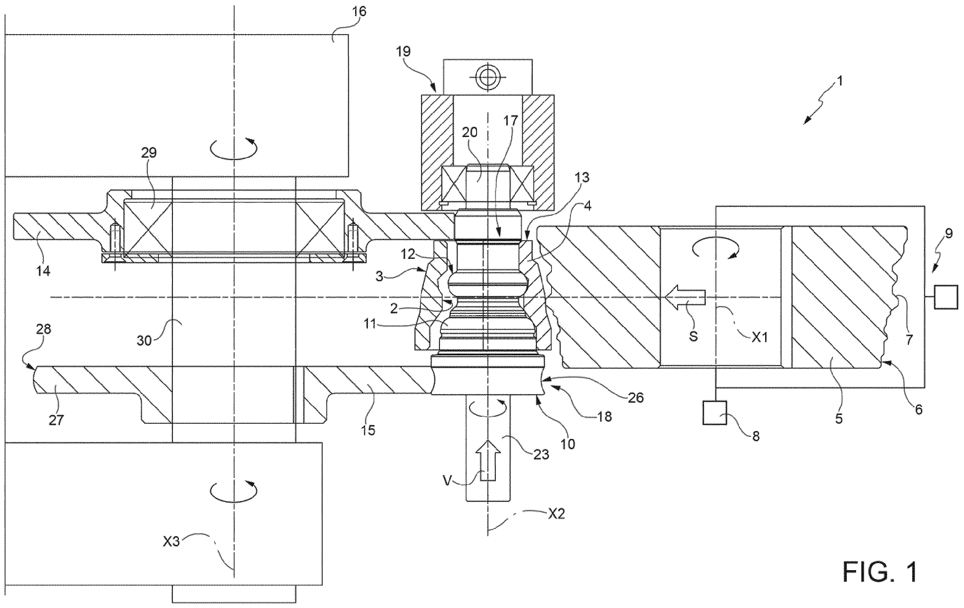

With reference to figures 1, 2 and 4, reference numeral 1 indicates as a whole an equipment for rolling predetermined axial-symmetric profiles on radial surfaces 2 and 3 of an annular element 4 to be processed, consisting of a forged steel blank having considerably different diameters on the opposite ends and usable to manufacture a steel insert for an outer ring of a rolling bearing in the example in figure 1. More in general (figure 2), the equipment 1 (which is shown only in part in figure 2) is used to process annular elements 4 (4b in figure 2) in which the inner radial surface 2 is delimited by at least two diameters of considerably different size.

Using the same reference numbers for similar or equal details for the sake of simplicity, the equipment 1 comprises: an axial-symmetric shaped forming tool, of known type as a whole, delimited by an outer radial surface 6 having a first predetermined longitudinal profile 7 in radial section; means 8, diagrammatically indicated by a block (figure 1), to make the tool 5 rotate about a first axis X1; and means 9, only diagrammatically indicated in figure 1, to exert a lateral thrust S on the forming tool 5 perpendicular to the first axis X1 and directed towards the annular element 4 to be processed, e.g. as diagrammatically shown in figure 1, acting on the rotation axis X1.

The equipment 1 further comprises an axial-symmetrically shaped mandrel 10 (10b in figure 2), revolving about a second axis X2 parallel to axis X1 and arranged by the side of the forming tool 5, in a position such as to receive the thrust S exerted on the tool 5 by the means 9 in use; the mandrel 10 has a working outer radial surface 11 having a predetermined longitudinal profile 12 in radial section (12b in figure 2) and a receiving space 13 is delimited for the annular element 4 (4b) to be processed between the first profile 7 of the tool 5 and the second profile 12,12b of the mandrel 10,10b, the mandrel 10,10b being shaped so as to engage the annular element 4,4b to be processed in thorough manner, in use. In practice, the only difference between the equipment 1 shown in figure 1 and the one shown in figure 2 is in the shape and size of the mandrel, and in particular of the surface 11 of the mandrel 10 or 10b, adapted to process two annular elements 4 and 4b of different shape and size. Therefore, hereinafter, the description will specifically refer only to figure 1, because it applies identically also to figure 2.

The equipment 1 further comprises a first receiving roll 14 and a second receiving roll 15 carried revolving about a third axis X3 parallel to axes X1 and X2 by a support 16 adapted to support the perpendicular thrust S exerted by the means 9 on the forming tool 5; the first roll 14 and the second roll 15 cooperate, respectively, with a first radial shoulder surface 17 and with a second radial shoulder surface 18 of the mandrel 10, between which the working surface 11 is delimited.

Finally, the equipment 1 comprises (known) means 19 for supporting a first end 20 of the mandrel 10 in idling manner, which end is arranged in the direction V of introduction in use of the mandrel 10 within the annular element 4 to be processed, and which is intended, in use, to axially protrude from the annular element 4 to be processed, as clearly shown in figures 1 and 2.

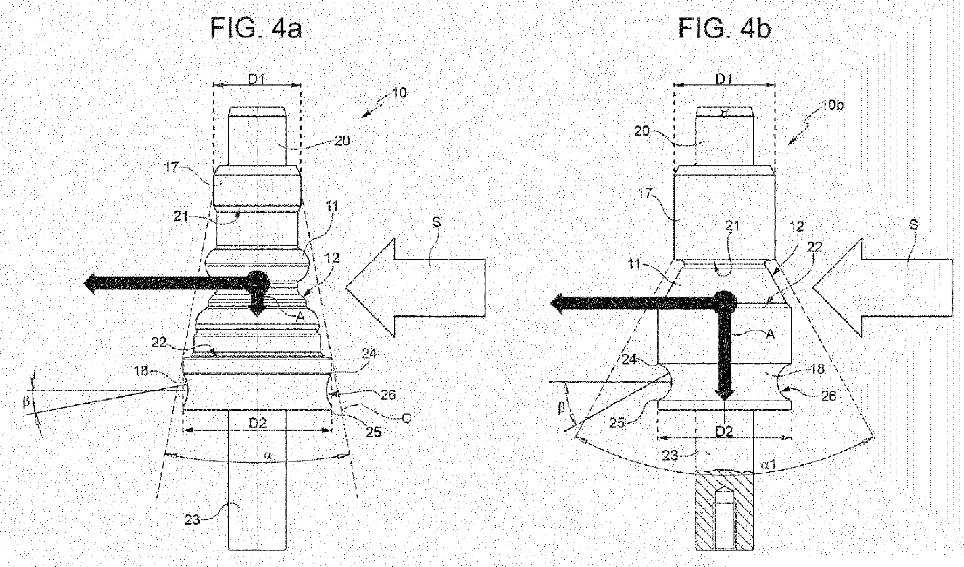

According to an aspect of the invention, the first and the second radial shoulder surface 17,18 of the mandrel 10 have, at opposite ends 21 and 22 of the predetermined longitudinal profile 12 (figures 4a and 4b), respectively, a first diameter D1 and a second diameter D2, differing from each other; the first diameter D1 of the first shoulder surface 17 is, in particular, smaller than the second diameter D2 of the second shoulder surface 18; furthermore, the first shoulder surface 17 is arranged immediately adjacent to the first end 20 of the mandrel 10, and thus faces, in use, in the direction V of introduction of the mandrel 10 in the element 4 to be processed.

Consequently, the first receiving roll 14 and the second receiving roll 15 have different diameters, in particular roll 14 is larger than roll 15.

The first shoulder surface 17 is defined by a cylindrical surface having a constant diameter in axial direction equal to diameter D1; the second shoulder surface 18 is arranged at a second end 23 of the mandrel 10, opposite to the first end 20.

The working outer radial surface 11 of the mandrel 10 is further shaped, according to a further aspect of the invention, so as to remain always delimited within a conical surface C (figure 4a) which touches the first and the second shoulder surface 17 and 18 at least in one point, so that the overall shape of the mandrel 10 is comparable to a cone.

The second radial shoulder surface 18 is shaped as a concave curved surface having the second diameter D2 as maximum diameter at opposite ends 24, 25 thereof, which surface 18 defines an annular groove 26 of predetermined radial depth on the mandrel 10.

Then, the second receiving roll 15 has a peripherally outer edge 27 delimited by a convex curved surface 28, mating with the shape of the surface 18, which engages the annular groove 26 of the mandrel 10 to keep the mandrel 10 axially locked and to absorb axial thrusts A (figure 4) possibly generated on the mandrel 10.

In particular, by effect of the described geometry of the mandrel 10 and of the rolls 14 and 15, the thrust S will always generate an axial thrust A on the mandrel 10 which is absorbed according to the invention by the support 16 owing to the roll 15, by virtue of the convex shaped edge 27.

The depth of the annular groove 26 of the mandrel 10 is higher as higher is a taper α (figure 4a) of the conical surface C; figure 4b shows an angle α1 which approximates in that case the angle of surface C. The annular groove 26 additionally has, on a radial plane, a circle arc profile defined by a radius which may be smaller as smaller is the taper α of the conical surface C, or also constant, but made so as to obtain a greater radial depth of the annular groove 26. In essence, as clearly shown in figures 4a and 4b, groove 26 and edge 27 are shaped so that a contact angle β between the concave surface 18 of the groove 26 and the convex surface 28 of the edge 27 increases as the taper α increases, above all, so that the contact (or rolling) angle β remains, in all cases, always within the radial profile of the annular groove 26. The purpose of the concave surface 18 / convex surface 28 coupling is indeed not only to position the mandrel 10 axially in correct manner, but above all to be suited to transmit the axial thrust A to the support 16 by means of the receiving roll 15.

According to a non-secondary aspect of the invention, the first receiving roll 14 is fitted on the support 16 in idling manner with respect to the second receiving roll 15, in the illustrated example by means of a rolling bearing 29 fitted on a common support shaft 30 of the rolls 14 and 15, so as to be able to rotate about the third axis X3 at a different speed from that of the second receiving roll 15.

The fact that, according to the invention, the longitudinal working profile of an outer radial surface of the mandrel, complementary to the profile to be obtained on the annular element, is delimited, on opposite ends thereof, by different diameters of the shoulder surfaces, determines an overall shape of the mandrel which is comparable to a cone, meaning that the outer side surface of the mandrel is delimited, between the mentioned shoulder surfaces of different diameter, within an ideal conical surface.

In this manner, one of the two shoulder surfaces can be manufactured with diameters either equal to or very similar to the minimum diameter of the radial surface of the mandrel along the working profile, so as to avoid creating sudden localized variations of diameter in the radial wall of the mandrel which could cause breakages in use.

Manufacturing one of the two shoulder surfaces, in particular the shoulder surface of greater diameter, as a concave surface defining an annular groove on the mandrel allows to manufacture the corresponding receiving roll with a peripherally outer convex edge which engages the groove relieving the support of the axial thrusts onto the receiving roll so that they do not burden the mandrel supports.

In this manner, it is possible to manufacture annular elements also having a greater difference of diameter at the opposite axial ends thereof without the risk of breakage of the mandrel in effective and reliable manner: it will suffice to manufacture the annular groove on the mandrel deeper as higher is the side thrust to be transmitted to the receiving rolls.

Manufacturing the equipment according to the invention allows to obtain annular elements by rolling, such as an outer ring of a rolling bearing, the rest of which is made of aluminum or other "light" material, such as composite material, which before the invention could only be made by chip-forming, and allows to consequently obtain considerable advantages in terms of manufacturing cost and time reduction.

## Claims

1. An equipment (1) for manufacturing by rolling predetermined axial-symmetric longitudinal profiles on radial surfaces (2, 3) of an annular element (4), comprising:
- an axial-symmetrically shaped forming tool (5) delimited by an outer radial surface (6) having a first predetermined longitudinal profile (7) in radial section;
- first means (8) for rotating the forming tool about a first axis (X1) and second means (9) for exerting a lateral thrust (S) on the forming tool perpendicular to the first axis;
- an axial-symmetrically shaped mandrel (10) revolving about a second axis (X2) parallel to the first one and arranged laterally to the forming tool, in such a position to receive the thrust exerted on the forming tool in use; a working outer radial surface (11) of the mandrel having a second predetermined longitudinal profile (12) in radial section; between the first profile of the tool and the second profile of the mandrel a receiving space (13) for the annular element to be processed being delimited, the mandrel (10) being shaped so as to thoroughly engage, in use, the annular element to be processed (4);
- a first and a second receiving roll (14, 15) carried revolving about a third axis (X3) parallel to the first axis by a support (16) adapted to support the perpendicular thrust exerted on the forming tool; the first and second roll (14, 15) cooperating with a first and a second radial shoulder surface (17, 18) of the mandrel between which the working surface (11) having the second predetermined profile is delimited; and
- means (19) for idly supporting a first end (20) of the mandrel, which first end is arranged in the direction (V) of introduction in use of the mandrel within the annular element to be processed and which is in use intended to axially protrude from the annular element to be processed;
**characterized in that**
the first and the second radial shoulder surface (17, 18) of the mandrel have, at opposite ends (21, 22) of the second predetermined longitudinal profile (12), a first and a second diameter (D1, D2), respectively, differing from each other; the first diameter (D1) of the first shoulder surface (17) being smaller than the second diameter (D2) and the first shoulder surface (17) being arranged immediately adjacent the first end (20) of the mandrel; and **in that**, in combination:
i)- the second radial shoulder surface (18) is shaped as a concave curved surface having the second diameter (D2) as maximum diameter, at opposite ends (24, 25) thereof, and which surface defines an annular groove (26) on the mandrel, having a predetermined radial depth; and
ii)- the second receiving roll (15) has a peripherally outer edge (27) delimited by a convex curved surface (28) mating with the second radial concave shoulder surface (18) and which engages the annular groove (26) of the mandrel (10) for keeping the mandrel axially locked and absorbing any axial thrusts (A) generated on the mandrel.

2. An equipment according to claim 1, **characterized in that** the first shoulder surface (17) is defined by a cylindrical surface having a constant diameter in axial direction and equal to the first diameter (D1); and **in that** the second shoulder surface (18) is arranged at a second end (23) of the mandrel, opposite the first end.

3. An equipment according to claim 1 or 2, **characterized in that** the working outer radial surface (11) of the mandrel is delimited within a conical surface (C) which touches the first and the second shoulder surface (17, 18) in at least one point so that the overall mandrel shape is comparable to a cone.

4. An equipment according to any of the preceding claims, **characterized in that** the working outer radial surface (11) of the mandrel is delimited within a conical surface (C) that touches the first and the second shoulder surface (17, 18) in at least one point; the mandrel annular groove (26) depth being greater as greater is a taper (α) of the conical surface; the annular groove (26) having a circle arc profile in a radial plane.

5. An equipment according to one of the preceding claims, **characterized in that** the first receiving roll (14) is mounted on the support in idling manner with respect to the second receiving roll (15), so as to be able to rotate about the third axis (X3) at a speed other than that of the second receiving roll (15).

6. An equipment according to one of the preceding claims, **characterized in that** the first and second receiving rolls (14, 15) have different diameters, the first roll (14) being larger than the second one (15).

## Patentansprüche

1. Ausrüstung (1) zur Herstellung durch Walzen von festgelegten achsensymmetrischen Längsprofilen auf radialen Flächen (2, 3) eines ringförmigen Elements (4), umfassend:
- ein achsensymmetrisch geformtes Umformwerkzeug (5), das durch eine äußere Radialfläche (6) begrenzt ist, die in radialem Schnitt ein erstes festgelegtes Längsprofil (7) aufweist;
- eine erste Einrichtung (8) zur Drehung des Umformwerkzeugs um eine erste Achse (X1) und eine zweite Einrichtung (9) zur Ausübung eines seitlichen Drucks (S) auf das Umformwerkzeug senkrecht zu der ersten Achse;
- einen achsensymmetrisch ausgeformten Dorn (10), der um eine zur ersten Achse parallele zweite Achse (X2) rotiert und der seitlich zum Umformwerkzeug in einer derartigen Position angeordnet ist, dass er den auf das Umformwerkzeug im Gebrauch ausgeübten Druck empfängt; wobei eine radial äußere Wirkfläche (11) des Dorns in radialem Schnitt ein zweites festgelegtes Längsprofil (12) aufweist; wobei für das zu bearbeitende ringförmige Element zwischen dem ersten Profil des Werkzeugs und dem zweiten Profil des Dorns ein Aufnahmeraum (13) begrenzt ist, wobei der Dorn (10) so geformt ist, dass er mit dem zu bearbeitenden ringförmigen Element (4) im Gebrauch vollständig in Eingriff gelangt;
- eine erste und eine zweite Aufnahmerolle (14, 15), die um eine zu der ersten Achse parallele dritte Achse (X3) drehend von einem Halter (16) getragen werden, der den auf das Umformwerkzeug ausgeübten senkrechten Druck halten kann; wobei die erste und zweite Rolle (14, 15) mit einer ersten und einer zweiten radialen Schulterfläche (17, 18) des Dorns zusammenwirken, zwischen denen die das zweite festgelegte Profil aufweisende Wirkfläche (11) begrenzt ist; und
- eine Einrichtung (19), um ein erstes Ende (20) des Dorns freilaufend zu halten, welches in der Richtung (V) der Einführung des Dorns im Gebrauch in das zu bearbeitende ringförmige Element angeordnet ist und welches im Gebrauch dazu vorgesehen ist, aus dem zu bearbeitenden ringförmigen Element axial herauszuragen; **dadurch gekennzeichnet, dass** die erste und die zweite radiale Schulterfläche (17, 18) des Dorns an entgegengesetzten Enden (21, 22) des zweiten festgelegten Längsprofils (12) einen ersten bzw. einen zweiten Durchmesser (D1, D2) aufweisen, welche sich voneinander unterscheiden; wobei der erste Durchmesser (D1) der ersten Schulterfläche (17) kleiner als der zweite Durchmesser (D2) ist und die erste Schulterfläche (17) an das erste Ende (20) des Dorns unmittelbar angrenzend angeordnet ist; und dass in Kombination:
i)- die zweite radiale Schulterfläche (18) als eine konkav gekrümmte Fläche ausgeformt ist und an entgegengesetzten Enden (24, 25) davon den zweiten Durchmesser (D2) als Höchstdurchmesser aufweist, und wobei die Fläche eine Ringnut (26) auf dem Dorn definiert, die eine festgelegte radiale Tiefe aufweist; und
ii)- die zweite Aufnahmerolle (15) eine periphere Außenkante (27) aufweist, die von einer zur konkaven zweiten radialen Schulterfläche (18) passenden konvex gekrümmten Fläche (28) begrenzt ist und die mit der Ringnut (26) des Dorns (10) dahingehend in Eingriff gelangt, den Dorn axial verriegelt und jegliche an dem Dorn erzeugten Axialdrücke (A) absorbieren zu lassen.

2. Ausrüstung nach Anspruch 1, **dadurch gekennzeichnet, dass** die erste Schulterfläche (17) eine zylindrische Fläche mit einem in Axialrichtung konstanten und dem ersten Durchmesser (D1) entsprechenden Durchmesser definiert; und dass die zweite Schulterfläche (18) an einem zweiten Ende (23) des Dorns gegenüber dem ersten Ende angeordnet ist.

3. Ausrüstung nach Anspruch 1 oder 2, **dadurch gekennzeichnet, dass** die radial äußere Wirkfläche (11) des Dorns von einer konischen Fläche (C) begrenzt ist, welche die erste und die zweite Schulterfläche (17, 18) an mindestens einem Punkt berührt, so dass die Dornform insgesamt mit einem Konus vergleichbar ist.

4. Ausrüstung nach einem der vorhergehenden Ansprüche, **dadurch gekennzeichnet, dass** die radial äußere Wirkfläche (11) des Dorns von einer konischen Fläche (C) begrenzt ist, die die erste und die zweite Schulterfläche (17, 18) an mindestens einem Punkt berührt; wobei die Tiefe der Ringnut (26) des Dorns umso größer ist je größer eine Konizität (α) der konischen Fläche ist; wobei die Ringnut (26) in einer radialen Ebene eine Kreisbogenprofil aufweist.

5. Ausrüstung nach einem der vorhergehenden Ansprüche, **dadurch gekennzeichnet, dass** die erste Aufnahmerolle (14) in Bezug auf die zweite Aufnahmerolle (15) derart freilaufend an dem Halter angebracht ist, dass sie sich mit einer anderen Geschwindigkeit als die zweite Aufnahmerolle (15) um die dritte Achse (X3) drehen kann.

6. Ausrüstung nach einem der vorhergehenden Ansprüche, **dadurch gekennzeichnet, dass** die erste und zweite Aufnahmerolle (14, 15) unterschiedliche Durchmesser aufweisen, wobei die erste Rolle (14) größer als die zweite (15) ist.

## Revendications

1. Équipement (1) de fabrication par laminage de profils longitudinaux à symétrie axiale prédéterminés sur des surfaces radiales (2, 3) d'un segment annulaire (4), l'équipement comprenant :
un outil de façonnage (5) présentant une forme à symétrie axiale, délimité par une surface radiale extérieure (6) ayant un premier profil longitudinal prédéterminé (7) dans une section radiale ;
un premier moyen (8) permettant de faire tourner l'outil de façonnage par rapport à un premier axe (X1), et un second moyen (9) permettant d'exercer une poussée latérale (S) sur l'outil de façonnage perpendiculairement au premier axe ;
un mandrin (10) présentant une forme à symétrie axiale, tournant par rapport à un deuxième axe (X2) parallèle au premier axe, et disposé latéralement par rapport à l'outil de façonnage dans une position permettant de recevoir la poussée exercée sur l'outil de façonnage lors de l'utilisation ; une surface radiale extérieure de travail (11) du mandrin ayant un second profil longitudinal prédéterminé (12) dans une section radiale ; un espace de réception (13) pour le traitement de l'élément annulaire étant délimité entre le premier profil de l'outil et le second profil du mandrin, le mandrin (10) présentant une forme lui permettant d'entrer totalement en contact, lors de l'utilisation, avec l'élément annulaire à traiter (4) ;
un premier et un second cylindre de réception (14, 15) supportés rotatifs par rapport à un troisième axe (X3) parallèle au premier axe par un support (16) conçu pour supporter la poussée perpendiculaire exercée sur l'outil de façonnage ; le premier et le second cylindre (14, 15) coopérant avec une première et une seconde surface d'épaulement radiale (17, 18) du mandrin entre lesquelles la surface de travail (11) ayant le second profil prédéterminé est délimitée ; et
un moyen (19) permettant de supporter au repos une première extrémité (20) du mandrin, ladite première extrémité étant située dans la direction (V) d'introduction, lors de l'utilisation, du mandrin dans l'élément annulaire à traiter et qui, lors de l'utilisation, est destinée à faire saillie axialement à partir de l'élément à traiter ;
l'équipement étant **caractérisé en ce que**
la première et la seconde surface d'épaulement radiale (17, 18) du mandrin ont respectivement, à des extrémités opposées (21, 22) du second profil longitudinal prédéterminé (12), un premier et un second diamètre (D1, D2) différents l'un de l'autre ; le premier diamètre (D1) de la première surface d'épaulement (17) étant plus petit que le second diamètre (D2), et la première surface d'épaulement (17) étant située immédiatement adjacente à la première extrémité (20) du mandrin ; et **en ce que**, en combinaison :
i) la seconde surface d'épaulement radiale (18) est formée comme une surface courbée concave ayant le second diamètre (D2) en guise de diamètre maximum, à ses extrémités opposées (24, 25), ladite surface définissant sur le mandrin une rainure annulaire (26) ayant une profondeur radiale prédéterminée ; et
ii) le second cylindre de réception (15) a une bordure extérieure périphérique (27) délimitée par une surface courbée convexe (28) épousant la seconde surface d'épaulement concave radiale (18) et qui se loge dans la rainure annulaire (26) du mandrin (10) pour maintenir le mandrin verrouillé axialement et absorber les quelconques poussés axiales (A) générées sur le mandrin.

2. Équipement selon la revendication 1, **caractérisé en ce que** la première surface d'épaulement (17) est définie par une surface cylindrique ayant un diamètre constant en direction axiale et égal au premier diamètre (D1) ; et **en ce que** la seconde surface d'épaulement (18) est située à une seconde extrémité (23) du mandrin, opposée à la première extrémité.

3. Équipement selon la revendication 1 ou 2, **caractérisé en ce que** la surface radiale extérieure de travail (11) du mandrin est délimitée dans une surface conique (C) qui touche la première et la seconde surface d'épaulement (17, 18) en au moins un point, de sorte que la forme globale du mandrin soit comparable à un cône.

4. Équipement selon l'une quelconque des revendications précédentes, **caractérisé en ce que** la surface radiale extérieure de travail (11) du mandrin est délimitée dans une surface conique (C) qui touche la première et la seconde surface d'épaulement (17, 18) en au moins un point ; la profondeur de la rainure annulaire de mandrin (26) étant croissante au fur et à mesure que croît un cône (α) de la surface conique ; la rainure annulaire (26) ayant un profil en arc de cercle dans un plan radial.

5. Équipement selon l'une quelconque des revendications précédentes, **caractérisé en ce que** le premier cylindre de réception (14) est monté sur le support de manière libre par rapport au second cylindre de réception (15), de manière à pouvoir tourner autour du troisième axe (X3) à une vitesse différente de celle du second cylindre de réception (15).

6. Équipement selon l'une quelconque des revendications précédentes, **caractérisé en ce que** les premier et second cylindres de réception (14, 15) ont des diamètres différents, le premier cylindre (14) étant plus grand que le second cylindre (15).
